# EUROPEAN PATENT APPLICATION

(11) **EP 4 654 678 A1**
(43) Date of publication of application: **26.11.2025**
(21) Application number: 24744188.4
(22) Date of filing: 12.01.2024
(51) Int. Cl.: H04W 52/02

(54) **VEHICLE KEY CONTROL METHOD, KEY TERMINAL, AND STORAGE MEDIUM**

(30) Priority: 20.01.2023 CN 202310097431
(71) Applicant: ZHEJIANG ZEEKR INTELLIGENT TECHNOLOGY CO., LTD., Ningbo, Zhejiang 315899 (CN); Zhejiang Geely Holding Group Co., Ltd., Hangzhou, Zhejiang 310051 (CN)
(72) Inventor: DUAN, Xinzheng, Ningbo, Zhejiang 315899 (CN)
(74) Representative: Studio Torta S.p.A.
(86) International application number: PCT/CN2024/072169
(87) International publication number: WO 2024/153012

(57) **Abstract**

The present application provides a vehicle key control method, a key terminal, and a storage medium. The key terminal obtains a positioning control signal when a shake-to-wake function is started, adjusts a working state of an ultra-wide band module according to the positioning control signal, and counts total time for which the ultra-wide band module is in an activated state. When the total time is greater than or equal to a preset time threshold and a state of a vehicle door is not changed, the shake-to-wake function is turned off, and the ultra-wide band module is controlled to be in a dormant state, so that the ultra-wide band module of the key terminal is activated to perform corresponding positioning operation only when the positioning control signal is obtained. In the case that the accumulated use time of the ultra-wide band module is too long and the vehicle is not used, the activation operation on the ultra-wide band module by the key terminal based on the shake-to-wake function is stopped, so that the working state of the ultra-wide band module is stopped. This reduces the power consumption based on the ultra-wide band module, and improves the power utilization efficiency of the device.

## Description

This application claims priority to Chinese Patent Application No. 202310097431.3, filed with the China National Intellectual Property Administration on January 20, 2023, and entitled "VEHICLE KEY CONTROL METHOD, KEY TERMINAL AND STORAGE MEDIUM", the entire content of which is incorporated in this application by reference.

### TECHNICAL FIELD

Embodiments of the present application relate to the field of vehicle control technology and, in particular, to a vehicle key control method, a key terminal, and a storage medium.

### BACKGROUND

With the development of automotive intelligence, there is a growing demand for the experience of passive entry passive start (Passive Entry Passive Start, PEPS). Mobile phone digital key based on Bluetooth connection and ultra-wide band (Ultra-wide Band, UWB) positioning has become a new technology that all original equipment manufacturers are scrambling to adopt. However, since the average power consumption is relatively high during UWB works, a mobile phone digital key and a vehicle continuously consume power when a distance between the mobile phone digital key and the vehicle meets working conditions of the UWB. This makes it difficult for remote control keys having button cells to meet user's daily use, and mobile phones also suffer from rapid power drop.

### SUMMARY

The present application provides a vehicle key control method, a key terminal and a storage medium, for solving the technical problem of low power utilization efficiency of a device having an ultra-wide band function.

In a first aspect, the present application provides a vehicle key control method applied to a key terminal. The key terminal is in a communication connection with a vehicle, and the key terminal includes an ultra-wide band module, and the method includes:
obtaining a positioning control signal when a shake-to-wake function is started, and adjusting a working state of the ultra-wide band module according to the positioning control signal; where the working state includes an activated state or a dormant state, and the positioning control signal includes a movement signal;
counting total time for which the ultra-wide band module is in the activated state; and
when the total time is greater than or equal to a preset time threshold and a state of a vehicle door is not changed, turning off the shake-to-wake function, and controlling the ultra-wide band module to be in the dormant state.

In the above technical solution, in the case that the shake-to-wake function is started, the key terminal, only when obtaining the positioning control signal, controls the ultra-wide band module to perform corresponding work. When the accumulated working time of the ultra-wide band module is greater than or equal to the preset time threshold and the state of the vehicle door is not changed, the shake-to-wake function is turned off and the activation operation on the ultra-wide band module by the key terminal based on the shake-to-wake function is stopped, so that the working state of the ultra-wide band module is stopped. This reduces the power consumption based on the ultra-wide band module and improves the power utilization efficiency of the device.

Optionally, the adjusting the working state of the ultra-wide band module according to the positioning control signal specifically includes:
controlling the ultra-wide band module to be in the activated state when the positioning control signal is obtained, and after a first preset time length, adjusting the ultra-wide band module to be in the dormant state when the key terminal does not obtain the positioning control signal again.

Optionally, the vehicle is provided with a plurality of ultra-wide band antennas; the controlling the ultra-wide band module to be in the activated state when the positioning control signal is obtained, and after the first preset time length, adjusting the ultra-wide band module to be in the dormant state when the key terminal does not obtain the positioning control signal again specifically includes:
controlling the ultra-wide band module in the key terminal to be in the activated state when the movement signal is obtained;
adjusting a first mobile flag in the key terminal to be in a valid state, and transmitting the first mobile flag to the vehicle through Bluetooth; where the first mobile flag is configured to control the vehicle to adjust a second mobile flag in the vehicle to be in a valid state, and control each of the ultra-wide band antennas to be in an activated state according to the second mobile flag;
after the first preset time length, adjusting the ultra-wide band module to be in the dormant state when the key terminal does not obtain the movement signal again; and
adjusting the first mobile flag to be in an invalid state, and transmitting the first mobile flag to the vehicle through Bluetooth; where the first mobile flag is configured to control the vehicle to adjust the second mobile flag to be in an invalid state, and control each of the ultra-wide band antennas to be in a waiting state according to the second mobile flag.

Optionally, the positioning control signal further includes a look-for-key signal; and the method further includes:
controlling the ultra-wide band module in the key terminal to be in the activated state when the look-for-key signal sent by the vehicle is obtained, and after the first preset time length, adjusting the ultra-wide band module to be in the dormant state when the key terminal does not obtain the look-for-key signal or the movement signal again.

Optionally, the method further includes:
resetting the total time to zero when the state of the vehicle door changes.

Optionally, before obtaining the positioning control signal, the method further includes:
establishing Bluetooth connection between the key terminal and the vehicle when the key terminal gets close to the vehicle to within a Bluetooth signal range, starting the shake-to-wake function, controlling the ultra-wide band module to be activated for the first preset time length, and resetting the total time to zero.

Optionally, before obtaining the positioning control signal, the method further includes:
obtaining a look-for-key signal sent by the vehicle when the shake-to-wake function is turned off; and
starting the shake-to-wake function according to the look-for-key signal, resetting the total time to zero, and then controlling the ultra-wide band module to be activated for a first preset time length.

Optionally, the vehicle includes a plurality of ultra-wide band antennas; and before obtaining the positioning control signal, the method further includes:
obtaining an ultra-wide band start control command sent by the vehicle; where the ultra-wide band start control command is a command generated and sent to the key terminal when the vehicle exits a start mode; and
starting the shake-to-wake function according to the ultra-wide band start control command, resetting the total time to zero, and then controlling the ultra-wide band module to be activated for a first preset time length.

Optionally, the method further includes:
obtaining an ultra-wide band closing control command sent by the vehicle; where the ultra-wide band closing control command is a command generated and sent to the key terminal when the vehicle enters a start mode, each of the ultra-wide band antennas is controlled to run for a second preset time length and then each of the ultra-wide band antennas is controlled to be in a waiting state; and
turning off the shake-to-wake function and adjusting the ultra-wide band module to be in the dormant state according to the ultra-wide band closing control command.

Optionally, after the turning off the shake-to-wake function and adjusting the ultra-wide band module to be in the dormant state according to the ultra-wide band closing control command, the method further includes:
obtaining a look-for-key request;
obtaining trigger source information from the look-for-key request; where the trigger source information includes in-vehicle trigger source information or out-of-vehicle trigger source information; and
adjusting the ultra-wide band module to be in the activated state when the look-for-key request contains the in-vehicle trigger source information.

In the above technical solutions, when the ultra-wide band module of the key terminal is in the dormant state and the shake-to-wake function, the ultra-wide band antennas of the vehicle remain in the waiting state, so that when the vehicle sends the look-for-key request to the key terminal, the ultra-wide band antennas of the vehicle can be waken up quickly, and the key terminal controls the ultra-wide band module to work through the look-for-key request. Therefore, the key terminal can still ensure the implementation of the look-for-key function during the power saving process.

In a second aspect, the present application provides a key terminal including: a processor and a memory in communication with the processor;
where the memory stores computer instructions; and
the processor, when executing the computer instructions, is configured to implement the vehicle key control method involved in the first aspect.

In a third aspect, the present application provides computer-readable storage medium, where computer instructions are stored in the computer-readable storage medium, and the computer instructions, when executed by a processor, are configured to implement the vehicle key control methods in the first aspect.

The present application provides a vehicle key control method, a key terminal and a storage medium. When the key terminal's shake-to-wake function starts, the key terminal obtains a positioning control signal including a movement signal, adjusts a working state, including an activated state or a dormant state, of an ultra-wide band module according to the positioning control signal, and counts total time for which the ultra-wide band module is in the activated state. When the total time is greater than or equal to a preset time threshold and a state of a vehicle door is not changed, the shake-to-wake function is turned off, and the ultra-wide band module is controlled to be in the dormant state, so that the ultra-wide band module of the key terminal is activated to perform corresponding positioning operation only when the positioning control signal is obtained. In addition, in the case that the accumulated time for which the ultra-wide band module is used is too long and the vehicle is not used, the activation operation on the ultra-wide band module by the key terminal based on the shake-to-wake function is stopped, so that the working state of the ultra-wide band module is stopped. This reduces the power consumption based on the ultra-wide band module, and improvise the power utilization efficiency of the device.

### BRIEF DESCRIPTION OF DRAWINGS

FIG. 1 is an application scenario diagram of a vehicle key control method according to an exemplary embodiment of the present application.
FIG. 2 is a schematic flowchart of a vehicle key control method according to an exemplary embodiment of the present application.
FIG. 3 is a schematic flowchart of a vehicle key control method according to another exemplary embodiment of the present application.
FIG. 4 is a schematic flowchart of a vehicle key control method according to another exemplary embodiment of the present application.
FIG. 5 is a schematic structural diagram of a key terminal according to an embodiment of the present application.

### DETAILED DESCRIPTION

Exemplary embodiments will be described herein in detail, examples of which are represented in the drawings. When the following description refers to the drawings, the same numbers in different drawings indicate the same or similar elements unless otherwise indicated. The implementations described in the following exemplary embodiments do not represent all embodiments consistent with that of the present application. Rather, they are merely examples of devices and methods consistent with some aspects of the present application as detailed in the appended claims.

The present application provides a key control method, a key terminal and a storage medium, which are intended to solve the technical problem of low power utilization efficiency of a device having an ultra-wide band function. The technical concept of the present application is that in the case that a shake-to-wake function is started, the key terminal, only when obtaining a positioning control signal, controls an ultra-wide band module to perform corresponding work. When accumulated working time of the ultra-wide band module is greater than or equal to a preset time threshold and a state of a vehicle door is not changed, the shake-to-wake function is turned off and the activation operation on the ultra-wide band module by the key terminal based on the shake-to-wake function is stopped, so that the working state of the ultra-wide band module is stopped. This reduces the power consumption based on the ultra-wide band module and improves the power utilization efficiency of the device.

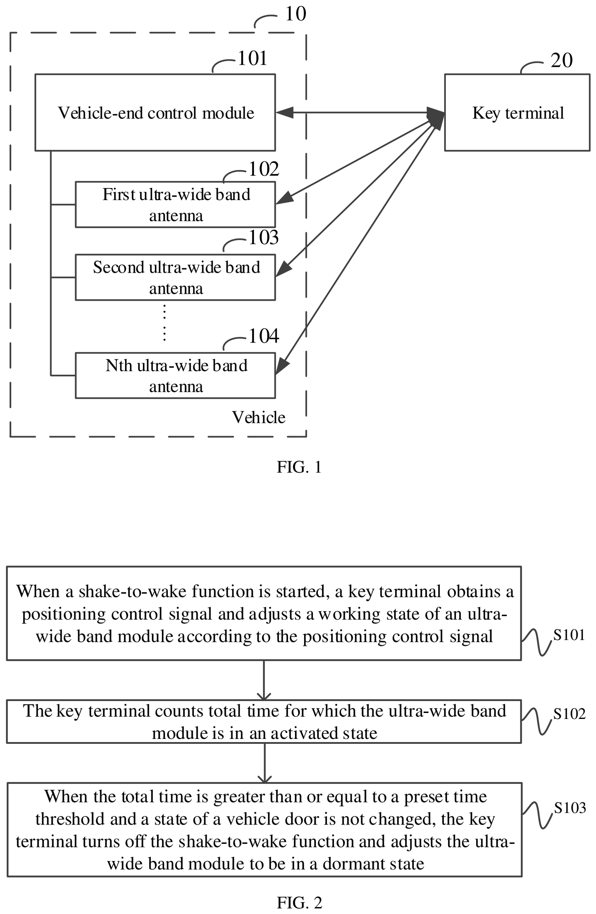

FIG. 1 is an application scenario diagram of a vehicle key control method according to an exemplary embodiment of the present application. As shown in FIG. 1, a scenario diagram includes a vehicle 10 and a key terminal 20, where the vehicle 10 includes a vehicle-end control module 101 and N ultra-wide band antennas, and the N ultra-wide band antennas are a first ultra-wide band antenna 102, a second ultra-wide band antenna 103, ..., and an Nth ultra-wide band antenna 104, respectively. The key terminal 20 includes an ultra-wide band module. In an embodiment, the key terminal 20 includes a mobile phone or a remote control key.

The key terminal 20 is in communication with the vehicle control module 101 and the N ultra-wide band antennas, respectively. The vehicle control module 101 is in communication with the N ultra-wide band antennas, respectively.

After the vehicle 10 is in Bluetooth connection with the key terminal 20, that is, after the vehicle control module 101 is in Bluetooth connection the key terminal 20, the vehicle 10 wakes up each of the ultra-wide band antennas to work. At the same time, the ultra-wide band module in the key terminal 20 is activated and begins to perform information interaction with each of the ultra-wide band antennas, respectively. Therefore, the vehicle 10 and/or the key terminal 20 determine distances between the key terminal 20 and the ultra-wide band antennas, respectively, thereby determining the position information of the key terminal 20 relative to the vehicle 10, that is, positioning the key terminal 20 and enabling the vehicle 10 to perform corresponding locking and unlocking operations according to the positions of the key terminal 20 and the vehicle 10.

After the vehicle 10 is in Bluetooth connection the key terminal 20, the key terminal 20 also starts a shake-to-wake function, so that the key terminal 20 controls the ultra-wide band module to run continuously for a first preset time length when receiving a movement signal. If the key terminal 20 receives the movement signal again within a time range corresponding to the first preset time length or after the end of the first preset time length, the key terminal 20 re-counts a first running time length. In addition, if the vehicle control module 10 sends a look-for-key signal to the key terminal 20, the key terminal 20 also controls the ultra-wide band module to run continuously for the first preset time length.

The key terminal 20 counts accumulated running time of the ultra-wide band module from the start of the shake-to-wake function. When the accumulated running time is greater than or equal to a preset time range and a state of a vehicle door is not changed, the shake-to-wake function is turned off and the activation operation on the ultra-wide band module by the key terminal 20 based on the shake-to-wake function is stopped, so that the working state of the ultra-wide band module is stopped. This reduces the power consumption based on the ultra-wide band module and improves the power utilization efficiency of the device.

FIG. 2 is a schematic flowchart of a vehicle key control method according to an exemplary embodiment of the present application. As shown in FIG. 2, a vehicle key control method includes the following steps.

S101, when a shake-to-wake function is started, a key terminal obtains a positioning control signal and adjusts a working state of an ultra-wide band module according to the positioning control signal.

The positioning control signal is a signal that controls the key terminal to start the ultra-wide band module, so that the ultra-wide band module interacts with the ultra-wide band antennas of the vehicle to position the key terminal. In an embodiment, the positioning control signal includes a movement signal, and the movement signal is a signal generated by a movement detection module installed in the key terminal according to a movement state of the key terminal.

The shake-to-wake function refers to a function in which the key terminal can wake the ultra-wide band module up according to the movement signal generated during the shaking of the key terminal, so that the ultra-wide band module enters an activated state.

The working state of the ultra-wide band module includes an activated state or a dormant state. That is, when the ultra-wide band module works, the working state is the activated state; and when the ultra-wide band module stops working, the working state is the dormant state.

When the key terminal starts the shake-to-wake function and obtains the positioning control signal, the key terminal controls the ultra-wide band module to be in the activated state, and adjusts the ultra-wide band module to be in the dormant state when the key terminal does not obtain the positioning control signal again after a first preset time length.

S102, the key terminal counts total time for which the ultra-wide band module is in the activated state.

S103, when the total time is greater than or equal to a preset time threshold and a state of a vehicle door is not changed, the key terminal turns off the shake-to-wake function and adjusts the ultra-wide band module to be in the dormant state.

No change in the state of the vehicle door indicates that the vehicle door is changed from open to closed or from closed to open.

The key terminal may obtain the state of the vehicle door sent by the vehicle through Bluetooth.

When the total time is greater than or equal to the preset time threshold and the state of the vehicle door is not changed, the vehicle performs a positioning operation on the key terminal for a long time, but the user who uses the key terminal does not operate the vehicle, and thus the key terminal will turn off the shake-to-wake function. At the same time, the ultra-wide band antennas of the vehicle are adjusted to a waiting state, and the key terminal cannot activate the ultra-wide band module to work according to the obtained movement signal.

In the above technical solutions, in the case that the shake-to-wake function is started, the key terminal, only when obtaining the positioning control signal, controls the ultra-wide band module to perform corresponding work. When the accumulated working time of the ultra-wide band module is greater than or equal to the preset time threshold and the state of the vehicle door is not changed, the shake-to-wake function is turned off and the activation operation on the ultra-wide band module by the key terminal based on the shake-to-wake function is stopped, so that the working state of the ultra-wide band module is stopped. This reduces the power consumption based on the ultra-wide band module, and improves the power utilization efficiency of the device.

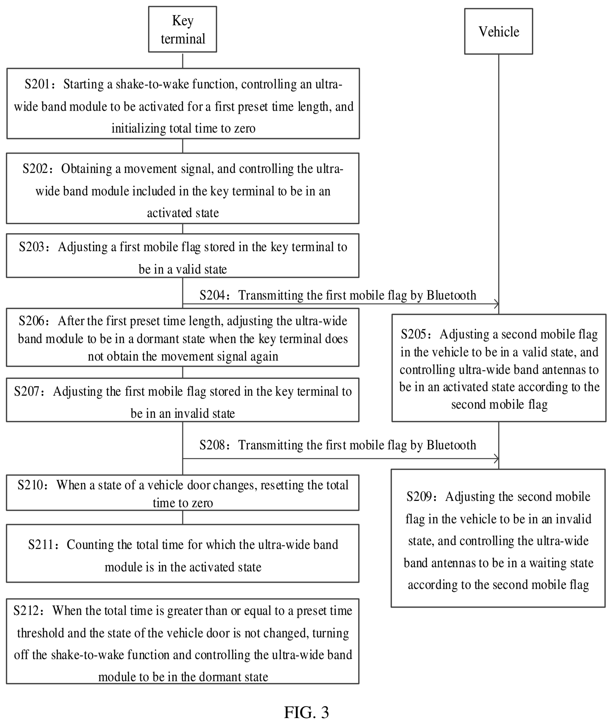

FIG. 3 is a schematic flowchart of a vehicle key control method according to another exemplary embodiment of the present application. As shown in FIG. 3, a vehicle key control method includes the following steps.

S201, a key terminal starts a shake-to-wake function, controls an ultra-wide band module to be activated for a first preset time length, and resets total time to zero.

In an application scenario, the key terminal gets close to the vehicle to within a Bluetooth signal range, establishes Bluetooth connection with the vehicle, starts the shake-to-wake function, controls the ultra-wide band module to be activated for the first preset time length, and resets the total time to zero.

In an embodiment, the first preset time length is 30 seconds.

In another application scenario, the shake-to-wake function is in a turned-off state, and the key terminal obtains a look-for-key signal sent by the vehicle, starts the shake-to-wake function according to the look-for-key signal, resets the total time to zero, and then controls the ultra-wide band module to be activated for the first preset time length.

In another application scenario, the key terminal obtains an ultra-wide band start control command sent by the vehicle, starts the shake-to-wake function according to the ultra-wide band start control command, resets the total time to zero, and then controls the ultra-wide band module to be activated for the first preset time length. The ultra-wide band start control command is a command generated and sent to the key terminal when the vehicle exits a start mode, and the vehicle simultaneously controls each of the ultra-wide band antennas to run for the first preset time length.

S202, the key terminal obtains a movement signal and controls the ultra-wide band module in the key terminal to be in an activated state.

After obtaining the movement signal, the key terminal triggers the shake-to-wake function to activate the ultra-wide band module in the key terminal, so that the module cooperates with the ultra-wide band antennas of the vehicle for corresponding positioning operation.

S203, the key terminal adjusts a first mobile flag stored in the key terminal to be in a valid state.

In an embodiment, the valid state is "1".

S204, the key terminal transmits the first mobile flag to a vehicle by Bluetooth.

S205, the vehicle adjusts a second mobile flag in the vehicle to be in a valid state, and controls each of the ultra-wide band antennas to be in an activated state according to the second mobile flag.

The vehicle adjusts the second mobile flag in the vehicle to be in a valid state according to the obtained first mobile flag in a valid state, and controls each of the ultra-wide band antennas to be adjusted from a waiting state to an activated state according to the second mobile flag.

S206, after the first preset time length, the ultra-wide band module is adjusted to a dormant state when the key terminal does not obtain the movement signal again.

The first preset time length is time for which the ultra-wide band module works after the key terminal obtains the movement signal. Within a time range corresponding to the first preset time length, if the key terminal obtains the movement signal again, the key terminal re-counts working time of the ultra-wide band module.

When the key terminal does not obtain the movement signal again after the first preset time length, the ultra-wide band module is controlled to stop working.

S207, the key terminal adjusts the first mobile flag stored in the key terminal to be in an invalid state.

In an embodiment, the invalid state is "0".

S208, the key terminal transmits the first mobile flag to the vehicle by Bluetooth.

S209, the vehicle adjusts the second mobile flag in the vehicle to be in an invalid state, and controls each of the ultra-wide band antennas to be in a waiting state according to the second mobile flag.

The vehicle adjusts the second mobile flag in the vehicle to be in an invalid state according to the obtained first mobile flag in an invalid state, and controls each of the ultra-wide band antennas to be adjusted from an activated state to a waiting state according to the second mobile flag.

S210, when a state of a vehicle door changes, the key terminal resets the total time to zero.

It is to be noted that the sequence of this step and step S211 is not specifically limited.

S211: the key terminal counts the total time for which the ultra-wide band module is in the activated state.

The key terminal counts the total time for which the ultra-wide band module is in the activated state, that is, the key terminal counts the accumulated time for which the ultra-wide band module works.

In another embodiment, the positioning control signal further includes a look-for-key signal.

Similar to the movement signal, when the total time for which the ultra-wide band module in the key terminal is in the activated state is less than the preset time threshold, the key terminal may also obtain a look-for-key signal sent by the vehicle, that is, sent by a vehicle-end control module to the key terminal. When the look-for-key signal sent by the vehicle is obtained, the ultra-wide band module in the key terminal is controlled to be in the activated state. After the first preset time length, the ultra-wide band module is adjusted to be in the dormant state when the key terminal does not obtain the look-for-key signal or the movement signal again.

S212, when the total time is greater than or equal to a preset time threshold and the state of the vehicle door is not changed, the key terminal turns off the shake-to-wake function and adjusts the ultra-wide band module to be in the dormant state.

In an embodiment, the preset time threshold is 10 minutes.

In the above technical solutions, after the shake-to-wake function is started, the key terminal only works for the first preset time when obtaining the movement signal and/or the look-for-key signal. This reduces the continuous positioning operation of the vehicle to the key terminal that is not moved, and reduces the power loss generated by the vehicle and the key terminal during the invalid positioning process. Under the condition that the accumulated use time of the wide band module is too long and the vehicle is not used, the activation operation on the ultra-wide band module by the key terminal based on the shake-to-wake function is stopped, so that the working state of the ultra-wide band module is stopped. This reduces the power consumption based on the ultra-wide band module, and improves the power utilization efficiency of the device.

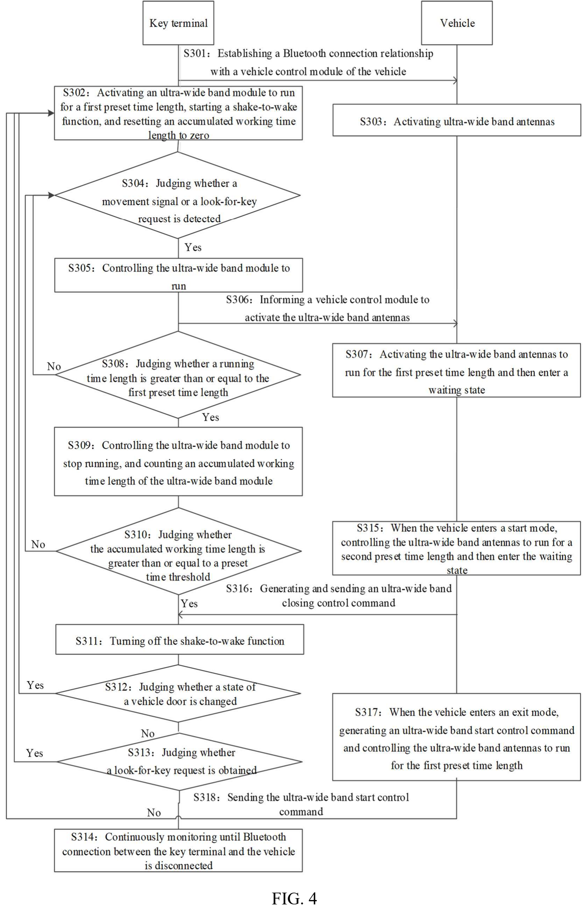

FIG. 4 is a schematic flowchart of a vehicle key control method according to another exemplary embodiment of the present application. As shown in FIG. 4, a vehicle key control method includes the following steps.

S301, a key terminal establishes a Bluetooth connection relationship with a vehicle control module of a vehicle.

S302, the key terminal activates an ultra-wide band module to run for a first preset time length, starts a shake-to-wake function, and resets an accumulated working time length to zero.

S303, the vehicle activates ultra-wide band antennas.

More specifically, activation time of the ultra-wide band antennas is synchronized with activation time of the ultra-wide band module.

S304, the key terminal judges whether a movement signal or a look-for-key request is detected.

If yes, step S305 is entered; if not, the ultra-wide band antennas maintain the current working state, and the ultra-wide band module maintains the current working state.

For the key terminal, if the ultra-wide band module is in a dormant state, the ultra-wide band module continues to maintain the dormant state under the condition that the movement signal is not detected or the look-for-key request is not received by the key terminal; and if the ultra-wide band module is in the activated state, the ultra-wide band module continues to maintain the activated state until its running time length is greater than or equal to the first preset time length under the condition that the movement signal is not detected or the look-for-key request is not received by the key terminal.

S305, the key terminal controls the ultra-wide band module to start running.

At the same time, the key terminal starts timing the running time of the ultra-wide band module.

S306, the key terminal informs the vehicle control module to activate the ultra-wide band antennas.

S307, the vehicle activates the ultra-wide band antennas to run for the first preset time length and then enter a waiting state.

The vehicle activates the ultra-wide band antennas to run for the first preset time length, and if the vehicle does not receive an activation notification from the key terminal within a time range corresponding to the first preset time length, the ultra-wide band antennas enter the waiting state after running for the first preset time.

S308, the key terminal judges whether a running time length is greater than or equal to the first preset time length.

If yes, step S309 is entered; if not, step S304 is entered to monitor information obtained by the key terminal.

S309, the key terminal controls the ultra-wide band module to stop running, and counts an accumulated working time length of the ultra-wide band module.

The accumulated working time length is a total time length for which the ultra-wide band module is in the activated state and cooperates with the ultra-wide band antennas to perform positioning operation after the shake-to-wake function is started.

S310, the key terminal judges whether the accumulated working time length is greater than or equal to a preset time threshold.

If yes, step S311 is entered; if not, step S304 is entered.

S311, the key terminal turns off the shake-to-wake function.

After the shake-to-wake function is turned off, the ultra-wide band module will not be activated to work if the key terminal receives the look-for-key request again.

S312, the key terminal judges whether a state of a vehicle door is changed.

If yes, step S302 is entered; if not, step S313 is entered.

S313, the key terminal judges whether a look-for-key request is obtained.

More specifically, if the vehicle does not enter the start mode, the key terminal judges whether the look-for-key request is obtained, and if yes, step S302 is entered; if not, step S314 is entered.

If the vehicle enters the start mode, trigger source information is obtained from the look-for-key request when the look-for-key request is obtained, and the trigger source information includes in-vehicle trigger source information or out-of-vehicle trigger source information. When the look-for-key request contains the in-vehicle trigger source information, the ultra-wide band module is adjusted to be in the activated state. When the look-for-key request contains the out-of-vehicle trigger source information, the request is ignored.

S314, the key terminal preforms continuous monitoring until Bluetooth connection with the vehicle is disconnected.

S315: when the vehicle enters a start mode, the vehicle controls the ultra-wide band antennas to run for a second preset time length and then enter the waiting state.

In the second preset time length, the vehicle performs positioning on the key terminal, so that the user completes a look-for-key operation.

In an embodiment, the second preset time length is 5 seconds.

S316, the vehicle generates an ultra-wide band closing control command and sends it to the key terminal.

The terminal ultra-wide band closing control command of the terminal is used to make the key terminal turn off the shake-to-wake function and control the ultra-wide band module to stop running.

S317: when the vehicle enters an exit mode, the vehicle generates an ultra-wide band start control command and controls the ultra-wide band antennas to run for the first preset time length.

S318, the vehicle sends the ultra-wide band start control command to the key terminal.

The ultra-wide band start control command is configured to bring the key terminal to enter step S302 to start the shake-to-wake function, and control the ultra-wide band module to be activated for the first preset time length after the total time is reset to zero.

In the above technical solutions, the key terminal determines the working states of the ultra-wide band module and the ultra-wide band antennas, according to the start state of the vehicle, the look-for-key signal, and the obtained movement signal. This greatly reduces the power consumption of the key and the vehicle. In addition, when the ultra-wide band module of the key terminal is in the dormant state and the shake-to-wake function, the ultra-wide band antennas of the vehicle remain in the waiting state, so that when the vehicle sends the look-for-key request to the key terminal, the ultra-wide band antennas of the vehicle can be waken up quickly, and the key terminal controls the ultra-wide band module to work through the look-for-key request, so that the key terminal can still ensure the implementation of the look-for-key function during the power saving process.

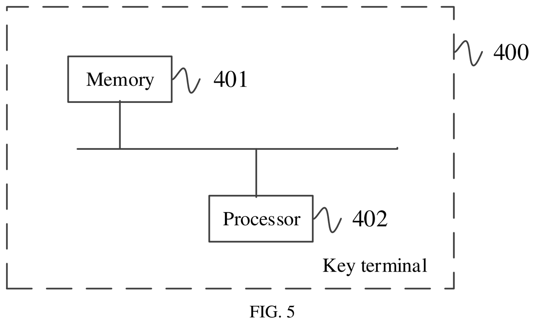

FIG. 5 is a schematic structural diagram of a key terminal according to an embodiment of the present application. A key terminal 400 includes a memory 401 and a processor 402. The memory 401 is configured to store computer instructions executable by the processor. The memory 401 may include a random access memory (Random Access Memory, RAM), and may also include a non-volatile memory (Non-Volatile Memory, NVM), for example, at least one disk memory, and may also be a U disk, a mobile hard disk, a read-only memory, a magnetic disk or an optical disk.

When executing computer instructions, the processor 402 implements the steps in the vehicle key control method with the key terminal as an execution subject in the above embodiments. For details, the related description in the aforementioned method embodiments may be referred to. The processor 402 may be a central processing unit (Central Processing Unit, CPU), and may also be other general processors, a digital signal processor (Digital Signal Processor, DSP), and an application specific integrated circuits (Application Specific Integrated Circuit, ASIC), etc. The general processor may be a microprocessor or the processor may be any conventional processor, etc. The steps of the methods disclosed in combination with the invention may be directly embodied as being completely executed by a hardware processor, or being completely executed by a combination of hardware and software modules in the processor.

Optionally, the memory 401 may be independent, and may also be integrated with the processor 402. When the memory 401 is independently disposed, the server 400 further includes a bus for connecting the memory 401 and the processor 402. The bus may be an industry standard architecture (Industry Standard Architecture, ISA) bus, a peripheral component interconnect (Peripheral Component Interconnect, PCI) bus or an extended industry standard architecture (Extended Industry Standard Architecture, EISA) bus, etc. The bus may be divided into an address bus, a data bus and a control bus, etc. For the convenience of illustration, the bus in the drawings of the present application is not limited to only one bus or one type of bus.

An embodiment of the present application also provides a computer-readable storage medium, computer instructions are stored in the computer-readable storage medium, and when the processor executes the computer instructions, the steps in the vehicle key control methods in the above embodiments are implemented.

An embodiment of the present application also provides a computer program product which includes computer instructions, and the computer instructions, when executed by a processor, implements the steps in the vehicle key control methods in the above embodiments.

It is easy for those skilled in the art to conceive of other embodiments of the present application after considering the specification and practicing the invention disclosed herein. The present application is intended to cover any variations, use or adaptive changes of the present application, which follow the general principles of the present application and include common sense or conventional technical means in the art that are not disclosed in the present application. The specification and the embodiments are regarded as exemplary only, with the true scope and spirit of the present application being indicated by the following claims.

It should be understood that the present application is not limited to the precise structures described above and shown in the drawings, and various modifications and changes may be made without departing from the scope thereof. The scope of the present application is limited only by the appended claims.

## Claims

1. A vehicle key control method, wherein the method is applied to a key terminal, the key terminal is in communication connection with a vehicle, the key terminal comprises an ultra-wide band module, and the method comprises:
obtaining a positioning control signal when a shake-to-wake function is started, and adjusting a working state of the ultra-wide band module according to the positioning control signal; wherein the working state comprises an activated state or a dormant state, and the positioning control signal comprises a movement signal;
counting total time for which the ultra-wide band module is in the activated state; and
when the total time is greater than or equal to a preset time threshold and a state of a vehicle door is not changed, turning off the shake-to-wake function, and controlling the ultra-wide band module to be in the dormant state.

2. The method according to claim 1, wherein the adjusting the working state of the ultra-wide band module according to the positioning control signal specifically comprises:
controlling the ultra-wide band module to be in the activated state when the positioning control signal is obtained, and after a first preset time length, adjusting the ultra-wide band module to be in the dormant state when the key terminal does not obtain the positioning control signal again.

3. The method according to claim 2, wherein the vehicle is provided with a plurality of ultra-wide band antennas; and the controlling the ultra-wide band module to be in the activated state when the positioning control signal is obtained, and after the first preset time length, adjusting the ultra-wide band module to be in the dormant state when the key terminal does not obtain the positioning control signal again specifically comprises:
controlling the ultra-wide band module in the key terminal to be in the activated state when the movement signal is obtained;
adjusting a first mobile flag in the key terminal to be in a valid state, and transmitting the first mobile flag to the vehicle through Bluetooth; wherein the first mobile flag is configured to control the vehicle to adjust a second mobile flag in the vehicle to be in a valid state, and control each of the ultra-wide band antennas to be in an activated state according to the second mobile flag;
after the first preset time length, adjusting the ultra-wide band module to be in the dormant state when the key terminal does not obtain the movement signal again; and
adjusting the first mobile flag to be in an invalid state, and transmitting the first mobile flag to the vehicle through Bluetooth; wherein the first mobile flag is configured to control the vehicle to adjust the second mobile flag to be in an invalid state, and control each of the ultra-wide band antennas to be in a waiting state according to the second mobile flag.

4. The method according to claim 3, wherein the positioning control signal further comprises a look-for-key signal; and the method further comprises:
controlling the ultra-wide band module in the key terminal to be in the activated state when the look-for-key signal sent by the vehicle is obtained, and after the first preset time length, adjusting the ultra-wide band module to be in the dormant state when the key terminal does not obtain the look-for-key signal or the movement signal again.

5. The method according to claim 1, wherein the method further comprises:
resetting the total time to zero when the state of the vehicle door changes.

6. The method according to claim 1, wherein before obtaining the positioning control signal, the method further comprises:
establishing Bluetooth connection between the key terminal and the vehicle when the key terminal gets close to the vehicle to within a Bluetooth signal range, starting the shake-to-wake function, controlling the ultra-wide band module to be activated for the first preset time length, and resetting the total time to zero.

7. The method according to claim 1, wherein before obtaining the positioning control signal, the method further comprises:
obtaining a look-for-key signal sent by the vehicle when the shake-to-wake function is turned off; and
starting the shake-to-wake function according to the look-for-key signal, resetting the total time to zero, and then controlling the ultra-wide band module to be activated for a first preset time length.

8. The method according to claim 1, wherein the vehicle comprises a plurality of ultra-wide band antennas; and before obtaining the positioning control signal, the method further comprises:
obtaining an ultra-wide band start control command sent by the vehicle; wherein the ultra-wide band start control command is a command generated and sent to the key terminal when the vehicle exits a start mode; and
starting the shake-to-wake function according to the ultra-wide band start control command, resetting the total time to zero, and then controlling the ultra-wide band module to be activated for a first preset time length.

9. The method according to claim 1, wherein the method further comprises:
obtaining an ultra-wide band closing control command sent by the vehicle; wherein the ultra-wide band closing control command is a command generated and sent to the key terminal when the vehicle enters a start mode, each of the ultra-wide band antennas is controlled to run for a second preset time length and then each of the ultra-wide band antennas is controlled to be in a waiting state; and
turning off the shake-to-wake function and adjusting the ultra-wide band module to be in the dormant state according to the ultra-wide band closing control command.

10. The method according to claim 9, wherein after the turning off the shake-to-wake function and adjusting the ultra-wide band module to be in the dormant state according to the ultra-wide band closing control command, the method further comprises:
obtaining a look-for-key request;
obtaining trigger source information from the look-for-key request; wherein the trigger source information includes in-vehicle trigger source information or out-of-vehicle trigger source information; and
adjusting the ultra-wide band module to be in the activated state when the look-for-key request contains the in-vehicle trigger source information.

11. A key terminal, comprising a processor and a memory in communication with the processor;
wherein the memory stores computer instructions; and
the processor, when executing the computer instructions, is configured to implement the vehicle key control method according to any one of claims 1 to 10.

12. A computer-readable storage medium, wherein computer instructions are stored in the computer-readable storage medium, and the computer instructions, when executed by a processor, are configured to implement the vehicle key control method according to any one of claims 1 to 10.
